# EUROPEAN PATENT APPLICATION

(11) **EP 1 638 344 A2**
(43) Date of publication of application: **22.03.2006**
(21) Application number: 05003330.7
(22) Date of filing: 16.02.2005
(51) Int. Cl.: H04N 9/79

(54) **Recorder, player**

(30) Priority: 21.09.2004 JP 2004273607
(71) Applicant: D & M Holdings, Inc., Sagamihara-shi Kanagawa (JP)
(72) Inventor: Sakuma, Hiroto, Sagamihara-shi Kanagawa, 228-8505 (JP)
(74) Representative: Altenburg, Udo

(57) **Abstract**

A recorder player (100) has a first encoder (4) for encoding broadcast video signals at a first image quality, a second encoder (14) for encoding the same video signals as those encoded by the first encoder (4) at a second image quality, which is lower than the first image quality, and a recording and reproducing unit (6) for recording and reproducing data which is encoded by the first encoder (4) and backup data which is encoded by the second encoder (14).

## Description

The present invention relates to a technique for a recorder player capable of programmed recording.

Hard disk recorders and other similar recorders are lately gaining popularities as a device to record broadcast signals of TV programs or the like. Benefited from the advancement in compression technology and an increase in recording medium capacity, those recorders have incomparably longer recordable time than video cassette tape recorders and can record many programs, which makes them very attractive to users.

Such a large-capacity recorder player still needs a user to, when the remaining capacity is not enough for a program to be recorded, manually create a room for new recording by erasing some of already recorded programs that are no longer necessary or by other methods. Accordingly, programmed recording could fail from a shortage of capacity in the case of recording a terrestrial broadcasting program, a satellite broadcasting program (broadcasting satellite (BS) program or communication satellite (CS) program), a cable program or the like with the use of a timer or other programmed recording functions.

Some highly multifunctional recorders boast a feature that enables a user away from home to program, via a cellular phone or a personal computer and the Internet, the recorder in his/her house to record. However, the feature which makes remote programming of recording possible is useless when the recorder refuses to be programmed because of shortage of capacity as in the above case.

This type of recorder in general does not allow a user away from home to take actions which clear the recorder's recordable area for programmed recording, such as selecting a record to erase, and which are what the user would do when he/she was home and found that the recorder was short of capacity. Thus, even such highly multifunctional recorders sometimes need the manual operation by a user to erase a recorded program.

The problem is addressed in unexamined laid-open Japanese patent application publication No. 2003-179851 (JP 2003-179851 A), which discloses a method of erasing, by overwriting, a program recorded as a temporary record when a recording capacity for a program scheduled to be normally recorded becomes short. According to this method, a recording capacity that is set aside is made available with some conditions and therefore a recorder can be programmed to record more programs.

Unexamined laid-open Japanese patent application publication No. 2002-271742 (JP2002-271742A) discloses an image recorder player which adjusts, upon execution of programmed recording, the image quality mode in accordance with the free (available) capacity, the recording time, and the recording image quality. This image recorder player executes programmed recording with the image quality mode set to Low when the free capacity is not enough. Thus the recorder rarely fails in executing programmed recording as programmed by its user without such hassles as canceling a scheduled recording and erasing data.

However, the above method and recorder respectively have problems given below. The method disclosed in JP 2003-179851 A creates a room for a new entry to programmed recording by erasing a temporary record program irrespective of whether the user has watched the program or not, and the erased program is lost to the user.

A problem of the recorder disclosed in JP 2002-271742 A is that the image quality of a recorded program may not be the one the user has wanted for that particular program. For instance, the recorder records a program in a high image quality mode while there is a large recording capacity left and, as the remaining capacity becomes short, records later programs in a low image quality mode disregarding what the user's will is.

The present invention has been made in view of the above, and an object of the present invention is to provide a recorder player capable of recording a broadcast program or the like at as close an image quality as possible to the one desired by a user without any hassle upon programming recording of the program and without erasing an already recorded program that the user does not want to erase.

A recorder player according to a first aspect of the invention includes: a first encoder for encoding broadcast video signals at a first image quality; a second encoder for encoding the same video signals as the video signals encoded by the first encoder at a second image quality, which is lower than the first image quality; and a recording and reproducing unit for recording and reproducing data which is encoded by the first encoder and backup data which is encoded by the second encoder.

In the recorder player, the first encoder is, for example, capable of encoding data at plural image quality levels, and the second encoder, for example, encodes data at the lowest level of the plural image quality levels.

The recorder player may further include an operation unit through which the recorder player is programmed to record a broadcast program, and when the recording and reproducing unit does not have a recordable capacity enough for a program scheduled to be recorded through the operation unit, the recording and reproducing unit may erase a program file which is comprised of data encoded by the first encoder.

In the recorder player, an erase level may be set to a program file which is composed of data encoded by the first encoder, and the recording and reproducing unit may erase the program file in accordance with the erase level set.

In the recorder player, whether backup data for the program scheduled to be recorded needs to be created with the second encoder or not may be inputted in advance through the operation unit, and when it is set that the program scheduled to be recorded does not need backup data, the second encoder may not encode video signals of the program.

A recording and reproducing method according to the second aspect of the invention includes: first encoding for encoding broadcast video signals at a first image quality; second encoding for encoding the same video signals as the video signals encoded by the first encoding at a second image quality, which is lower than the first image quality; and recording and reproducing data which is encoded by the first encoding and backup data which is encoded by the second encoding.

In the recording and reproducing method, the first encoding may encode data at plural image quality levels, and the second encoding may encode data at the lowest level of the plural image quality levels.

The recording and reproducing method may further include programming a recorder player to record a broadcast program, and when the recorder player does not have a recordable capacity enough for a program scheduled to be recorded, a program file which is comprised of data encoded by the first encoding may be erased in the recording and reproducing.

In the recording and reproducing method, for example, an erase level is set to a program file which is comprised of data encoded by the first encoding, and the program file is erased in the recording and reproducing in accordance with the erase level set.

In the recording and reproducing method, in the programming, whether backup data for the program scheduled to be recorded needs to be created by the second encoding or not may be inputted in advance, and when it is set that the program scheduled to be recorded does not need backup data, the second encoding may not be executed upon programmed recording of the program.

The invention will now be described by way of examples with reference to the accompanying drawings, throughout which like parts are referred to by like references, and in which:
FIG. 1 is a block diagram of a recorder player according to an embodiment of the present invention;
FIG. 2 is an explanatory diagram showing recording quality modes in association with recording capacities according to the embodiment of the present invention;
FIG. 3 is a record file management table according to the embodiment of the present invention;
FIGS. 4A and 4B are flow charts each illustrating processing of programming the recorder player to record a program according to the embodiment of the present invention;
FIG. 5 is a diagram showing an example of a screen for programmed recording;
FIG. 6 is a diagram showing an example of the record file management table after many programs have been recorded;
FIG. 7 is a flow chart showing a modification example of the embodiment of the present invention; and
FIG. 8 is a block diagram of a recorder player according to the modification example of the embodiment of the present invention.

A detailed description will be given below on an embodiment of the present invention with reference to the accompanying drawings.

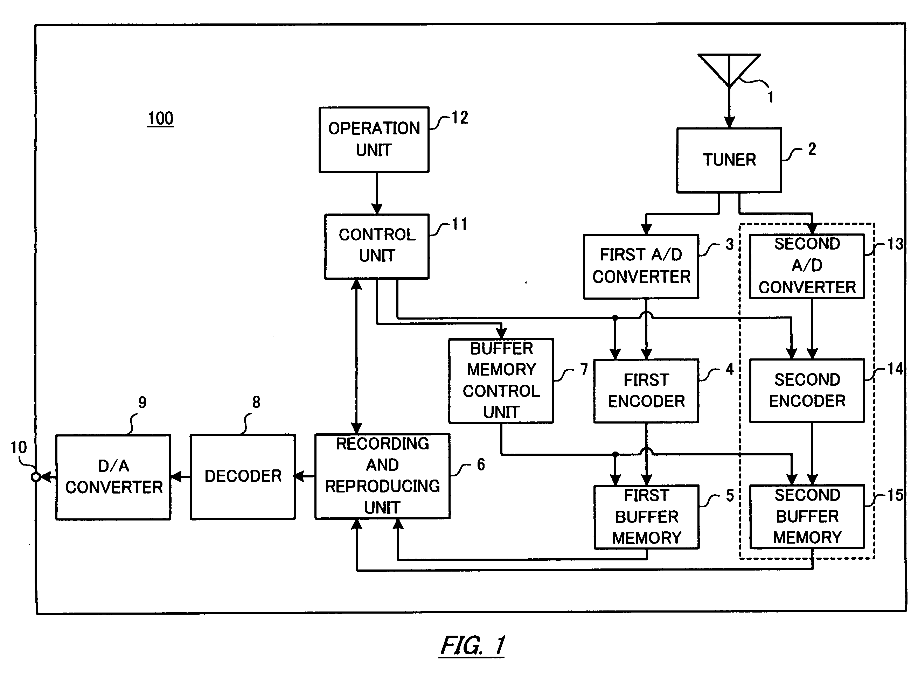

FIG. 1 illustrates a recorder player according to the embodiment of the present invention. A recorder player 100 shown in FIG. 1 has a tuner 2, first and second A/D converters 3 and 13, first and second encoders 4 and 14, first and second buffer memories 5 and 15, a recording and reproducing unit 6, a decoder 8, a D/A converter 9, and a control unit 11.

The tuner 2 is connected to an antenna 1, which receives analog broadcast signals at a given channel of TV broadcast or the like. A user can tune the tuner 2 to a desired channel by operating an operation unit 12, which will be described later.

The first and second A/D converters 3 and 13 are connected to the tuner 2. The first and second A/D converters 3 and 13 convert analog signals received by the tuner 2 into a digital signal.

The first and second encoders 4 and 14 encode, in a given format and at a given compression ratio, digital signals supplied from the first and second A/D converters 3 and 13, respectively. The first and second encoders 4 and 14 employ the MPEG (Motion Picture Experts Group) format, for example. As will be described later in detail, the second encoder 14 encodes digital signals at a compression ratio higher than that of the first encoder 4 to give a recorded image a lower quality.

The first and second buffer memories 5 and 15 are controlled by a buffer memory control unit 7 to temporarily store data supplied from the first and second encoders 4 and 14, respectively.

The recording and reproducing unit 6 has a permanent, or removable, recording medium (not shown in the drawing). The recording medium is, for example, a hard disk, preferably a large-capacity hard disk of several hundreds gigabytes or several terabytes. Alternatively, a removable disk recording medium, for example, a DVD (Digital Versatile Disk) may be employed.

The recording and reproducing unit 6 receives instructions from the control unit 11 to record encoded data that has been read out of the first and second buffer memories 5 and 15, as well as to reproduce and output the data recorded on the recording medium. The control unit 11 also instructs the recording and reproducing unit 6 to set the data recorded on the recording medium as erasable data or data that can be overwritten as will be described later in detail.

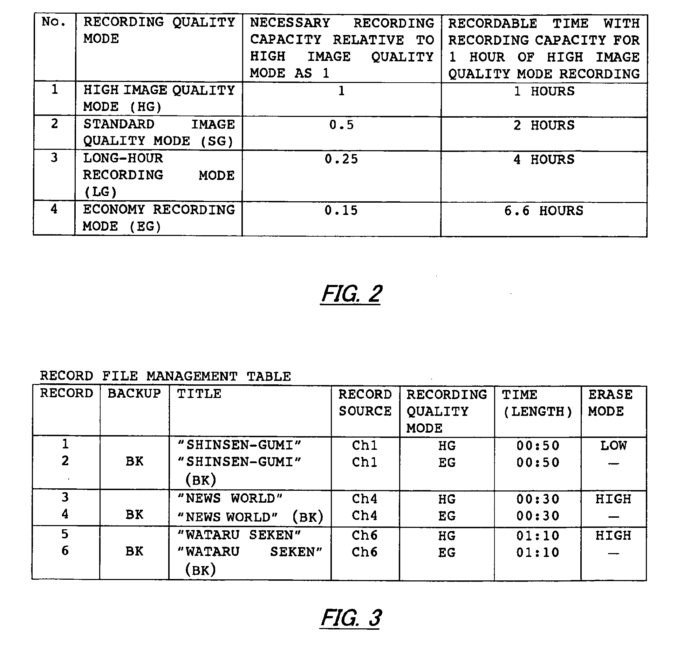

FIG. 2 is a diagram illustrating recording quality modes of data recorded in the recording and reproducing unit 6 in association with recording capacities. In FIG. 2, a "recording quality mode" field indicates an image qualitymode of data recorded in the recording and reproducing unit 6, and "HG" stands for a high (grade) image quality mode, "SG" stands for a standard (grade) image quality mode, "LG" stands for a long-hour (grade) recording mode, and "EG" stands for an economy (grade) recording mode. The recording quality modes HG, SG, LG and EG need a progressively smaller recording capacity in the order stated (with HG requiring the largest recording capacity of the four modes and EG requiring least of the four).

As shown in FIG. 2, the high image quality mode needs a recording capacity about 6.6 times (1/0.15) larger than that of the economy recording quality mode. In other words, when the free (available) recording capacity is enough for 1 hour of high image quality mode recording, 6. 6-hour long video data can be recorded in the economy recording mode. Most of commercially available recorder players have the four recording quality modes shown in FIG. 2, but the recorder player of this embodiment is not limited to four levels of recording quality mode.

Returning to FIG. 1, the first encoder 4 can encode data at different compression ratios under the control of the control unit 11. The first encoder 4 in this embodiment encodes data at four levels of compression ratio which correspond to the four recording quality modes, and outputs the encoded data to the recording and reproducing unit 6. The default recording quality mode of the first encoder 4 is, for example, the standard image quality mode and can be changed to a mode specified by a user.

The second encoder 14 encodes data in a lower recording quality mode (at a higher compression ratio) than that of the first encoder 14 under the control of the control unit 11, and outputs the encoded data to the recording and reproducing unit 6. The recording quality mode of the second encoder 14 can be specified by a user and is set to the economy recording mode, which is the lowest recording quality mode, in this embodiment. Preferably, the second encoder 14 encodes data at a possibly lowest compression level, but can be set to other levels. Data outputted from the second encoder 14 is recorded as backup data in the recording and reproducing unit 6 whereas data outputted from the first encoder 4 is recorded as normal record data.

The decoder 8 decodes data outputted from the recording and reproducing unit 6.

The D/A converter 9 converts data sent from the decoder 8 into analog data and outputs the analog data as video signals and audio signals to an output terminal 10.

The operation unit 12 is composed of, for example, a remote control device and a receiver of the remote control device. A user operates the recorder player 100 through the operation unit 12. For instance, the operation unit 12 provides OSD (On Screen Display) on a display connected to the recorder player 100. A user chooses a channel of the tuner, programs the recorder player 100 to record a broadcast program as will be described later, and makes other various changes in settings through the operation unit 12.

The operation unit 12 can receive an instruction input via a network which uses a cellular phone, a personal computer or the like if the operation unit 12 has appropriate devices including a network connection device and a device to receive information via the network.

The control unit 11 takes overall control of the recorder player 100.

Now, the recording operation of the recorder player 100 structured as above is described.

First, the recorder player 100 receives with the antenna 1 broadcast signals of terrestrial broadcast, satellite broadcast, cable broadcast or the like. Signals received at a given channel are inputted through the tuner 2 to the first and second A/D converters 3 and 13.

The first A/D converter 3, the first encoder 4 and the first buffer memory 5 constitute a path for signals that are encoded in a relatively high recording quality mode (a first signal path). The second A/D converter 13, the second encoder 14 and the second buffer memory 15 constitute a path for signals that are encoded in a relatively low recording quality mode (a second signal path) . For instance, broadcast signals are encoded in the highest recording quality mode "HG" on the first signal path and encoded in the lowest recording quality mode "EG" on the second signal path.

As recording of one program is started, signals of this program are encoded in the high image quality mode on the first signal path and in the economy recording mode on the second signal path. The two types of data of different recording quality modes are separately recorded as normal data and backup data in different areas of the recording and reproducing unit 6. The area where the normal data is recorded and the area where the backup data is recorded have different capacities as has been described. While this doubles the f ile number, only additional 15% or so of the recording medium capacity is consumed in this example instead of additional 100%. When the backup function is turned off as will be described later, the control unit 11 controls the second encoder 14 to not encode any data.

Of data recorded in the recording and reproducing unit 6, normal data is reproduced, upon instruction inputted by a user through the operation unit 12, and decoded by the decoder 8. The decoded data is converted into analog data by the D/A converter 9, and the analog data is outputted to a display or the like connected to the output terminal 10.

The control unit 11 has a record file management table for managing data files which are recorded in the recording and reproducing unit 6. The record file management table is displayed, for example, on an external display as shown in FIG. 3 for a user to see.

As the record file management table in FIG. 3 shows, two files of different recording quality modes are created for each recorded program. The example of FIG. 3 has six files in total to be managed for three programs, each of which is recorded in the high image quality mode and the economy recording mode.

In FIG. 3, a "backup" field indicates whether or not the file in question is a backup file recorded via the second signal path and a file whose "backup" field has "BK" is a backup file.

A "title" field in FIG. 3 shows the title of a file of a recorded program which is inputted automatically or manually. A title is automatically inputted when, for example, EPG, Electronic Program Guide, is used in programming the recorder player 100 to record the program. The title of every backup file has "(BK)" added to its tail automatically or manually to indicate the status of the file as a backup. This enables a user to discriminate, with ease, a file of the recording quality mode that the user has desired for the program from its backup file of a lower recording quality mode.

A "record source" field in FIG. 3 indicates the channel number of the like of a station that has broadcasted the recorded program.

A "recording quality mode" field in FIG. 3 indicates the recording quality mode of the file as described above. For instance, the "recording quality mode" field holds "HG" for a normal file and "EG" for a backup file.

A "time" field in FIG. 3 shows the length of the record.

An "erase mode" field in FIG. 3 indicates the order of priority in erasing files upon programming of recording. To elaborate, the "erase mode" field shows whether a normal file is to be erased or not and file erase priority. For instance, when "OFF" is written in the "erase mode" field of a file, the file is not erased whereas a file whose "erase mode" is set to "high" or "low" could be erased. Erasing of a file whose "erase mode" is "high" precedes erasing of a file whose "erase mode" is "low". A user can set an erase mode to a file through the operation unit 12. In this example, backup files are not automatically erased upon programming of recording and setting an erase mode to a backup file is not possible. A backup file is erased manually when a user chooses to do so.

The record file management table shown in FIG. 3 is merely an example. The record file management table of the control unit 11 may be a list of normal files which does not include backup files, or may be a list of backup files alone. The table may be looked up with the title, the recording quality mode, the presence or absence of a backup file, erase mode information or the like as a key to display retrieved files in groups.

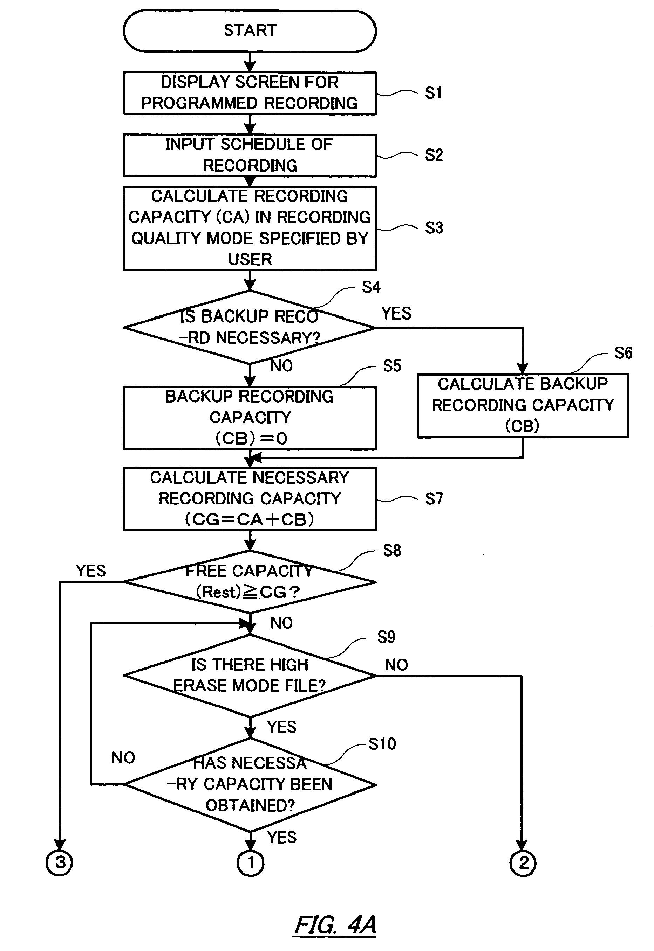

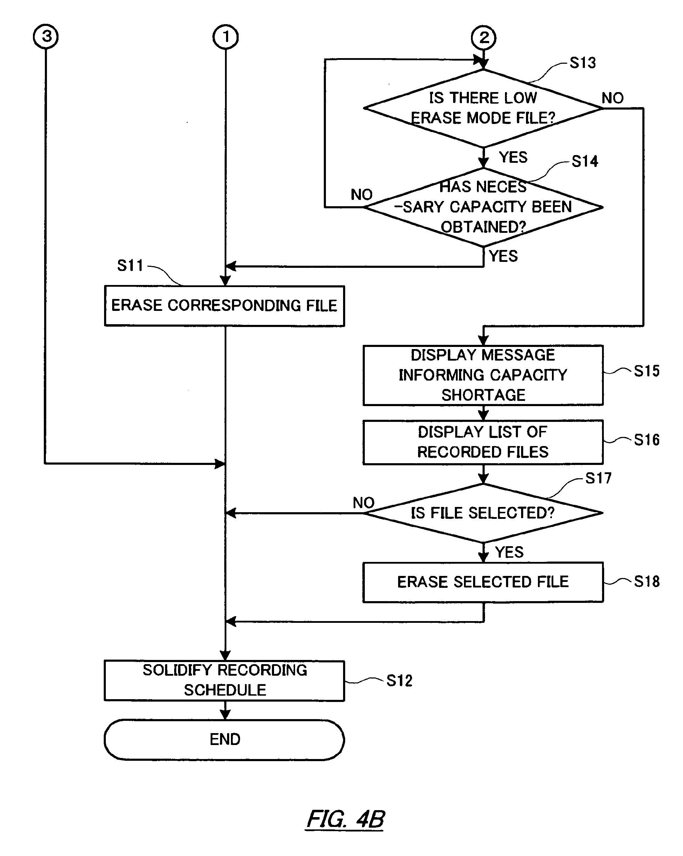

A detailed description is now given with reference to the drawings on the operation of the recorder player 100 of this embodiment while being programmed to record a program. FIGS. 4A and 4B are flow charts illustrating processing of programming the recorder player to record a program. The processing shown in FIGS. 4A and 4B is merely an example, and the present invention is not limited thereto.

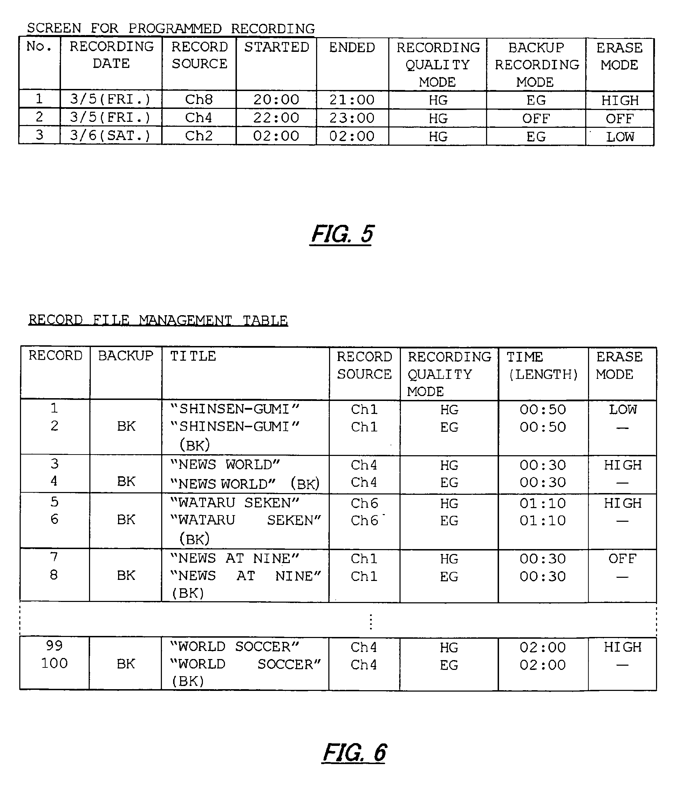

First, a user inputs an instruction to start programming operation through the operation unit 12. The control unit 11 has an external display device or the like display a screen for programmed recording, as the one shown in FIG. 5, in accordance with the instruction (Step S1).

In FIG. 5, a "number" field indicates the number of current entries of programs scheduled to be recorded. In the example of FIG. 5, there are three entries of programs scheduled to be recorded. "Recording date", "record source", "start", "end" and "recording quality mode" fields show the date of recording, a broadcast channel number, the time the recording is started, the time the recording is ended and a recording quality mode, respectively.

A "backup recordingmode" field indicates the recording quality mode of a backup file as described above. The "backup recording mode" is set to one of "SG", "LG" and "EG", or "OFF". A backup file is recorded, as has been described, in one of the above three modes that is lower than the recording qualitymode set to the corresponding normal record file. When the "backup recording mode" is set to "OFF" for a program scheduled to be recorded, a backup of this program is not made. This example allows a user to choose whether a backup is to be made or not instead of creating a backup file for every record. The default "backup recording mode" is set to, for example, the economy recording mode.

The user enters, on the screen for programmed recording, new programmed recording information similar to the list displayed (Step S2). In this example, the user inputs the broadcast date, record source, recording quality mode, backup recording quality mode, and erase mode of a program scheduled to be recorded. The recording quality mode, the backup recording quality mode and the erase mode are preset to, for example, "HG", "EG" and "Low", respectively, and changed by the user if necessary.

The control unit 11 calculates, based on the inputted information (broadcast time and recording quality mode), a recording capacity (CA) necessary to record the program entered (Step S3).

Then the control unit 11 looks up for the "backup recording mode" to determine whether a backup file is to be created or not (whether to write "OFF" in the "backup recording mode" field or not) . When a backup file is not to be created (OFF), the control unit 11 sets the capacity necessary for a backup (CB) to zero (0) (Step S5). When a backup file is to be created (ON), the control unit 11 calculates a capacity necessary for a backup (CB) (Step S6). The control unit 11 calculates the backup file capacity (CB) by multiplying the obtained recording capacity (CA) by a coefficient, which is in proportion to the recording quality modes. For instance, in the case where the recording quality mode is "HG" and the backup recording quality mode is "EG", CB is obtained by multiplying CA by 0.15. Alternatively, the backup recording capacity (CB) may be calculated from the inputted information as is the recording capacity (CA).

The control unit 11 calculates the sum of the recording capacity (CA) and the backup file recording capacity (CB) in the specified recording quality modes to obtain a total recording capacity (CG) (Step S7) . The Steps S5 and S6 may be omitted to directly calculate the total recording capacity (CG) by multiplying the obtained recording capacity (CA) by a given coefficient. For instance, in the case where the recording quality mode is "HG", CG is obtained by multiplying CA by 1.5, 1.25, 1.15, or 0.

Next, the control unit 11 determines whether or not the recording medium has enough free capacity left to record the program scheduled to be recorded. Specifically, the control unit 11 determines whether or not the free capacity (Rest) of the recording medium is equal to or larger than the total recording capacity (CG) (Step S8). When there is enough free capacity (Rest) (Step S8: YES), the scheduled recording of the program is solidified and a message to that effect is displayed (FIG. 4B, Step S12).

When the free capacity is not enough (FIG. 4A, Step S8: NO), all the record files that have been created are looked up for a file whose erase mode is set to "high" (Step S9).

When there is a file (or files) whose erase mode is set to "high" (Step 9: YES), the control unit 11 chooses a file of the highest priority according to a given order of priority. For instance, the control unit 11 determines by recording date to choose the oldest file. The standard by which priority is determined may be recording capacity, recording source, or the like other than recording date.

The control unit 11 then determines whether or not erasing of the high erase mode file that has been chosen makes the free capacity equal to or larger than the necessary recording capacity (CG) (Step S10). If the free capacity is still not enough (Step S10: NO), the control unit 11 repeats processing in Steps S9 and S10 and searches for a file whose erase priority is the next highest until the necessary capacity is obtained.

When enough free capacity to record the program is obtained (Step S10: YES), the control unit 11 controls the recording and reproducing unit 6 to erase the chosen file (s) (FIG. 4B, Step S11), solidifies the schedule of recording the program, and stores the schedule in an internal memory or the like (Step S12).

When there is no high erase mode file at all or when there are no high erase mode files left that are not already chosen (FIG. 4A, Step S9: NO), the control unit 11 searches for a file whose erase mode is set to "low" (FIG. 4B, Step S13). When a file (or files) whose erase mode is set to "low" is found as a result of the search, (Step S13: YES), the control unit 11 chooses one file in accordance with a given order of priority, and determines whether or not erasing of the chosen file makes the free capacity equal to or larger than the necessary recording capacity (CG) as in Step S10 (Step S14) . If the free capacity is still not enough (Step S14: NO), the control unit 11 repeats processing in Steps S13 and S14 and searches for a low erase mode file whose priority is the next highest until the necessary capacity is obtained.

When enough free capacity to record the program is obtained, the control unit 11 erases the chosen file(s) or sets the file(s) as a file (files) that can be overwritten (Step S11), and solidifies the schedule of recording the program (Step S12).

In the case where the free capacity is still not enough after erasing high erase mode files and low erase mode files (Step S13: NO), the control unit 11 has the display or the like display a message saying, for example, "Not enough capacity" (Step S15), and then display a list of files of recorded programs (Step S16). If there is a file whose erase mode is set to "OFF" and erasing of which will provide the necessary recording capacity, the control unit 11 presents to the user this file in place of the high or low erase mode files chosen in the above steps. For instance, the control unit 11 chooses, in accordance with a given order of priority, a file erase of which will provide the necessary recording capacity and presents this file to the user by pointing the file with a cursor, by highlighting the file, or by other methods. The control unit 11 has the display or the like display a message saying, for example, "Erase the file pointed by cursor? Press Enter key to erase. Press Up Arrow key or Down Arrow key to choose a different file", thereby prompting the user to select a file to be erased.

When the user does not choose the file presented by the control unit 11 (Step S17: NO), the control unit 11 ends the processing of programming the recorder player 100 to record a program without accepting the new entry to programmed recording (Step S12).

When the user chooses the file presented by the control unit 11 (Step S17: YES), the control unit 11 erases the selected high and/or low erase mode files and "OFF" file, or sets the files as a file that can be overwritten (Step S18), and solidifies the schedule of recording the program (Step S12). In this case, programmed recording of the program is executed as desired with the already inputted and set data, such as the recording date, the record source, the start time, the end time, and the recording quality mode, intact. While the user operates the cursor and the Enter key in the step of selecting a file to erase, processing in the preceding Steps S1 through S14 are carried out by the control unit 11 and no complex operation is required of the user. The recorder player 100 is therefore much improved in user-friendliness.

As the programmed recording inputted by the above processing is executed, the control unit 11 updates the record file management table for managing many recorded programs (files) as shown in FIG. 6, for example. The user can consult the record file management table. In the case where all files in the table cannot be displayed on the TV screen at once, the screen is turned from one page to another to display every file in the table.

As has been described, the recorder player of this embodiment records one program in a recording quality mode that is specified by a user and in a lower recording quality mode to create a normal file and a backup file. When the free capacity is not enough for a program newly scheduled to be recorded, a file whose erase mode is set to "high" or "low" is chosen out of files recorded in a recording quality mode that is specified by the user. The chosen file is automatically erased to provide the necessary free capacity. Thus, a situation in which a recorder cannot be programmed to record a program because of shortage of free capacity can be avoided without troubling a user.

In addition, unwanted erase of a recorded file upon programming is prevented since whether a file is erasable or not can be set in advance. Even when a file is erased, a user can view the erased program through reproduction of the backup file in the recording medium, albeit at a lower image quality. The recorder player of this embodiment is thus capable of recording and keeping a program at as close an image quality level as possible to the one desired by a user without unwanted erase of a record.

According to this embodiment, when the remaining recording area of a recording medium is none or not large enough to record a program by programmed recording, the program can be recorded at as close an image quality level as possible to the one desired by a user. This embodiment is also capable of avoiding a situation in which a recorded program is erased before a user has a chance to view the program in order to make room for a new program to be recorded.

In the above embodiment, one of three erase levels, "high", "low" and "OFF" is set to a file that is recorded in a recording quality mode specified by a user. The erase levels are not limited to three and there may be four levels set, for example, "high", "intermediate", "low" and"OFF", or more. Alternatively, there may be two erase levels, "ON" and "OFF".

In the above embodiment, a file of a recording quality mode specified by a user and a backup file of this file are recorded in the same recording medium. Alternatively, the file and the backup file may be recorded in different recording media. In this case, when a recording medium where backup files are recorded has reached its full capacity, for example, the recording medium can be replaced by another recording medium.

The recorder player of the above embodiment may further have a detecting unit for detecting whether a user has viewed (played) a recorded program or not, so that a backup file of the program is erased or set as a file that can be overwritten when the user is detected to have viewed the recorded program. This enables the recorder player to automatically erase an unnecessary backup file of a viewed program, and accordingly to always have a free recording medium capacity for a new record.

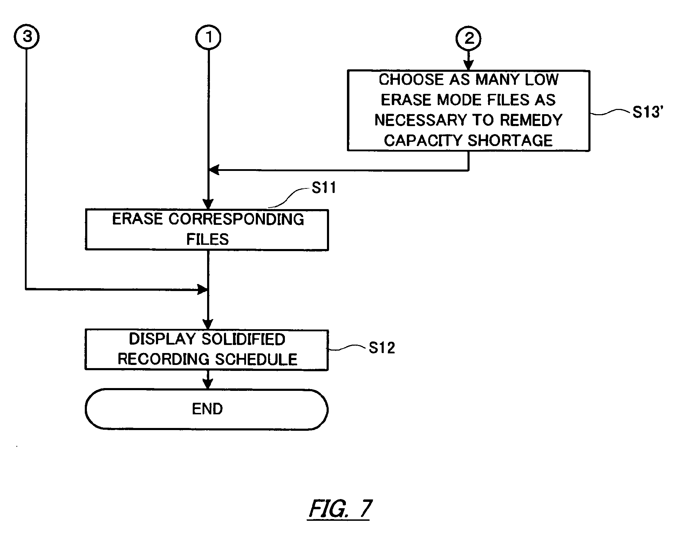

The recorder player of the above embodiment suggest a user to erase an "OFF" file when a capacity for a new program scheduled to be recorded is not obtained in the flow shown in FIG. 4B. As shown in FIG. 7, the recorder player may be structured to not need a user to choose a file to be erased. In the flow shown in FIG. 7, when the necessary capacity is not obtained by erasing erasable high erase mode files alone, there are enough low erase mode files recorded on the recording medium that are erasable, and enough free capacity is obtained by choosing and erasing these low erase mode files. In the case where the recording medium has a very large capacity to store a large number of files but only a small portion of the stored files is set as an "OFF" file, enough free capacity is obtained by erasing high and/or low erase mode files.

This is especially effective for when a user away from home attempts to program the recorder player to record via a cellular phone or a personal computer and the Internet but is thwarted because of shortage of free capacity, in other words, when a user cannot take actions which free up a capacity such as selecting a program to be erased, since no complex operation is required. The recorder player may be structured to be switchable between the flow shown in FIG. 4B and the flow shown in FIG. 7 upon instruction of a user. For instance, the recorder player is switched by the user to the flow shown in FIG. 7 when the user leaves his/her house.

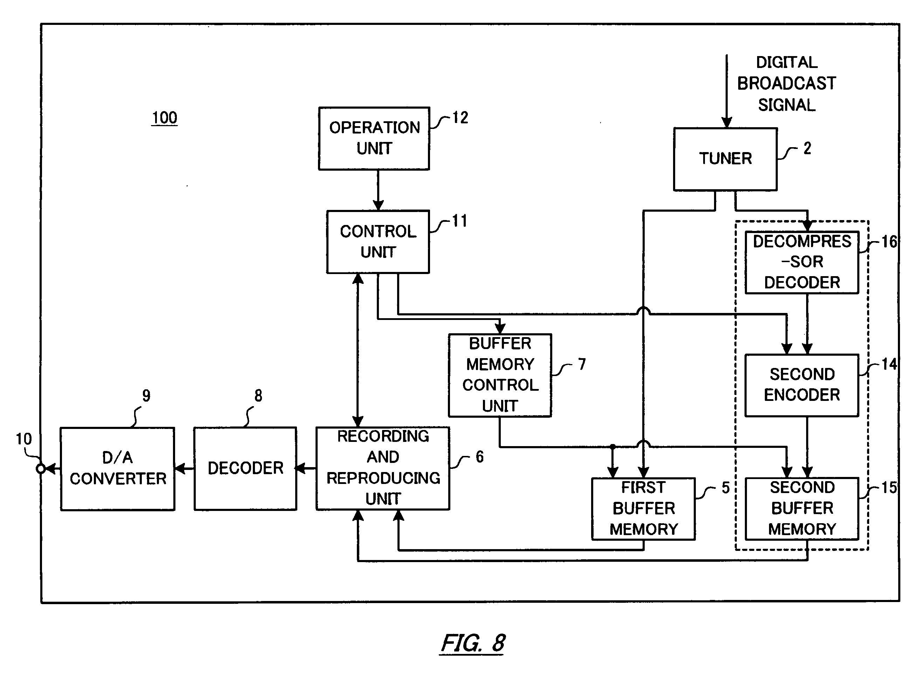

The above embodiment describes an example of receiving analog broadcast and outputting received data as analog signals. However, the present invention is also applicable to a recorder player that receives digital broadcast. FIG. 8 shows an example of this type of image recorder player. In this recorder player, received data of a given compression ratio is recorded as it is in a recording and reproducing unit 6. Concurrently, the received data is decoded by a decompressor decoder 18, and then encoded by a second encoder 14 at a compression ratio higher than the original compression ratio to have a lower image quality. The encoded data is recorded in the recording and reproducing unit 6. Thus digital signals too can be recorded at two different image quality levels.

The above embodiment deals with an example of outputting recorded data as analog signals. However, the present invention is also applicable to a recorder player that outputs recorded data as digital signals. In this case, data reproduced in a recording and reproducing unit 6 and decoded by a decoder 8 is encoded in a given output format by, for example, an encoder for IEEE (Institute of Electrical and Electronic Engineers) 1394 or an encoder for HDM (High-Definition Multimedia Interface). The encoded digital signals are outputted to a display device such as a digital TV to which digital signals can be inputted.

Although only some exemplary embodiments of the present invention have been described in detail above, those skilled in the art will readily appreciate that many modifications are possible in the exemplary embodiments without materially departing from the novel teachings and advantages of the present invention. Accordingly, all such modifications are intended to be included within the scope of the present invention.

## Claims

1. A recorder player comprising:
a first encoder (4) for encoding broadcast video signals at a first image quality;
a second encoder (14) for encoding the same video signals as the video signals encoded by the first encoder (4) at a second image quality, which is lower than the first image quality; and
a recording and reproducing unit (6) for recording and reproducing data which is encoded by the first encoder (4) and backup data which is encoded by the second encoder (14).

2. The recorder player according to claim 1,
wherein the first encoder (4) is capable of encoding data at plural image quality levels, and
wherein the second encoder (14) encodes data at a lowest level of the plural image quality levels.

3. The recorder player according to claim 1 or 2, further comprising an operation unit (12) through which the recorder player is programmed to record a broadcast program,
wherein, when the recording and reproducing unit (6) does not have a recordable capacity enough for a program scheduled to be recorded through the operation unit (12), the recording and reproducing unit (6) erases a program file which is comprised of data encoded by the first encoder (4).

4. The recorder player according to claim 3,
wherein an erase level is set to a program file which is comprised of data encoded by the first encoder (4), and
wherein the recording and reproducing unit (6) erases the program file in accordance with the erase level set.

5. The recorder player according to claim 3,
wherein whether backup data for the program scheduled to be recorded needs to be created with the second encoder (14) or not is inputted in advance through the operation unit (12), and
wherein, when it is set that the program scheduled to be recorded does not need backup data, the second encoder (14) does not encode video signals of the program.

6. A recording and reproducing method comprising:
first encoding for encoding broadcast video signals at a first image quality;
second encoding for encoding the same video signals as the video signals encoded by the first encoding at a second image quality, which is lower than the first image quality; and
recording and reproducing data which is encoded by the first encoding and backup data which is encoded by the second encoding.

7. The recording and reproducing method according to claim 6,
wherein the first encoding is for encoding data at plural image quality levels, and
wherein the second encoding is for encoding data at a lowest level of the plural image quality levels.

8. The recording and reproducing method according to claim 6 or 7, further comprising programming a recorder player to record a broadcast program,
wherein, when the recorder player does not have a recordable capacity enough for a program scheduled to be recorded, a program file which is comprised of data encoded by the first encoding is erased in the recording and reproducing.

9. The recording and reproducing method according to claim 8,
wherein an erase level is set to a program file which is comprised of data encoded by the first encoding, and
wherein the program file is erased in the recording and reproducing in accordance with the erase level set.

10. The recording and reproducing method according to claim 8,
wherein, in the programming, whether backup data for the program scheduled to be recorded needs to be created by the second encoding or not is inputted in advance, and
wherein, when it is set that the program scheduled to be recorded does not need backup data, the second encoding is not executed upon programmed recording of the program.
